# EUROPEAN PATENT SPECIFICATION

(11) **EP 1 911 275 B1**
(45) Date of publication and mention of the grant of the patent: **03.11.2010**
(21) Application number: 06823624.9
(22) Date of filing: 04.08.2006
(51) Int. Cl.: H04N 5/44

(54) **APPARATUS FOR PROVIDING MULTIPLE SCREENS AND METHOD OF DYNAMICALLY CONFIGURING MULTIPLE SCREENS**
GERÄT ZUR BEREITSTELLUNG MEHRERER BILDSCHIRME UND VERFAHREN ZUR DYNAMISCHEN EINSTELLUNG MEHRER BILDSCHIRME
DISPOSITIF POUR LA FOURNITURE D'ECRANS MULTIPLES ET PROCEDE DE CONFIGURATION DYNAMIQUE D'ECRANS MULTIPLES

(30) Priority: 05.08.2005 US 705491 P; 06.04.2006 US 789577 P; 09.06.2006 US 812090 P; 02.08.2006 KR 20060073118
(43) Date of publication of application: 16.04.2008
(73) Proprietor: Samsung Electronics Co., Ltd., Suwon-si, Gyeonggi-do 442-742 (KR)
(72) Inventor: LEE, Jong-Ho, Seoul 150-936 (KR); LEE, Kwang-Kee, Seoul 138-747 (KR); JUNG, Un-Gyo, Gyeonggi-do 445-777 (KR); ADAMS, Glenn, A., Cambridge, MA 02138 (US)
(74) Representative: Brandon, Paul Laurence
(86) International application number: PCT/KR2006/003079
(87) International publication number: WO 2007/018382

(56) References cited:
- EP-A- 1 343 090
- EP-A- 1 555 649
- WO-A1-96/19895
- WO-A2-01/99436
- JP-A- 08 079 641
- JP-A- 62 251 926
- KR-U- 920 014 268
- US-A- 5 347 624
- US-A- 5 694 560
- US-A- 5 796 969
- US-A1- 2002 067 433

## Description

### Technical Field

Apparatuses and methods consistent with the present invention relate to configuring multiple screens, and more particularly, to dynamically configuring multiple screens which provide multiple contents on a single physical display device.

### Background Art

Related art broadcast receivers such as digital televisions (TVs) or digital set-top boxes provide only one content element on a single physical display device or simultaneously display a main screen and a sub-screen on a single physical display device.

Even though related art broadcast receivers can simultaneously display both the main screen and the sub-screen on the same display screen, they can only arrange the main screen and the sub-screen in a.limited number of manners. In the case of a content displayed within the main screen, all elements of the content, i.e., video data, audio data, and other data, are displayed. On the other hand, in the case of a content displayed within the sub-screen, only some of the elements of the content are displayed.

Content sources include a broadcast service such as a satellite broadcaster, a terrestrial broadcaster, or a cable broadcaster, a storage medium such as digital versatile discs (DVDs), or an external device connected to an input terminal. However, it is quite difficult to display contents provided by such various content sources on a display screen using the existing broadcast receivers.

In an interactive TV application program environment such as the Multimedia Home Platform (MHP), the Advanced Common Application (ACAP), the Open Cable Application Platform (OCAP), it is assumed that only one screen is output on a physical display device.

n the interactive TV application program environment, for example, a Home Audio/ Video Interoperability (HAVi) based user interface (UI) is adopted. According to the HAVi UI standard, even though no restriction is imposed on the number of screens displayed on a physical display device, only one screen is generally displayed on a physical display device.

### Disclosure of Invention

### Technical Problem

In such an environment, it is difficult to perform operations, such as decoding, digital signal processing, user interaction processing, etc. with respect to one among multimedia contents displayed on a screen while displaying the multimedia contents on independent screens. In addition, it is also difficult to dynamically control the life cycles of application programs and the use of resources in the units of the screens.

Accordingly, there exists a need for a method of displaying a variety of contents on a dynamically configured screen.

US 2002/0067433 discloses an apparatus for displaying multiple screens according to the pre-characterising portion of claim 1.

EP1555649 discloses an apparatus for providing multiple screens which do not overlap and a processing module that determines whether a new application requests acquisition of a display area on the screen that is already in use by a look-up table process and makes a determination as a result as to whether the new application can run now.

### Technical Solution

The present invention provides an apparatus and method for dynamically configuring multiple screens which provide a plurality of contents on a physical display device.

According to an aspect of the present invention, there is provided an apparatus for providing multiple screens, the apparatus comprising: a screen generating module which generates the multiple screens, including a logical screen and a display screen for displaying a service; a service selecting module which connects the service to the logical screen generated by the service generating module; and an output module which maps the logical screen to an arbitrary location of the display screen and includes a plurality of output ports via which the display screen is provided physical display screen, **characterized in that**: the service comprises data information, the data information comprises application information regarding application program for the service, the application information includes information indicating whether the application program can be executed on a picture-in-picture screen and the service selecting module determines from the application information whether the service can be displayed on the physical screen.

According to another aspect of the present invention, there is provided a method of dynamically configuring multiple screens, the method comprising:
generating the multiple screens, including a logical screen and a display screen for displaying a predetermined service; connecting the service to the logical screen; mapping the logical screen to an arbitrary location of the display screen; and providing the display screen via a plurality of output ports physical display screen; characterized in that: the service comprises data information, the data information comprises application information regarding application program for the service, the application information includes information indicating whether the application program can be executed on a picture-in-picture screen, and the connecting further determines from the application information whether the service can be displayed on the physical screen.

### Description of Drawings

The above and other aspects of the present invention will become more apparent by describing in detail exemplary embodiments thereof with reference to the attached drawings, in which:

FIGS. 1A to 1H are diagrams illustrating configurations of a PIP screen according to an exemplary embodiment of the present invention;

FIG. 2 is a diagram illustrating the relationship between a logical screen and a display screen according to an exemplary embodiment of the present invention;

FIGS. 3 A to 3E are diagrams illustrating a configuration of a screen including a mapper according to an exemplary embodiment of the present invention;

FIG. 4 is a block diagram illustrating service sources according to an exemplary embodiment of the present invention;

FIGS. 5 A and 5B are diagrams illustrating a non-abstract service and an abstract service according to an exemplary embodiment of the present invention;

FIG. 6 is a diagram illustrating attribute information and interfaces of a logical screen and a display screen;

FIG. 7 is a diagram illustrating an attribute 'z-order' of a logical screen according to an exemplary embodiment of the present invention;

FIGS. 8 A and 8B are diagrams each illustrating an attribute 'Display_Area' of a logical screen according to exemplary embodiments of the present invention;

FIG. 9 illustrates a restriction of a service selection operation according to an exemplary embodiment of the present invention;

FIG. 10 is a diagram illustrating a method of mapping two services to a display screen according to an exemplary embodiment of the present invention;

FIG. 11 is a block diagram illustrating a configuration of an apparatus for providing multiple screens according to an exemplary embodiment of the present invention;

FIG. 12 is a flowchart illustrating a method of dynamically configuring multiple screens according to an exemplary embodiment of the present invention;

FIG. 13 is a diagram illustrating a software architecture for providing multiple screens according to an exemplary embodiment of the present invention:

FIG. 14 is a diagram illustrating the relationships among modules constituting an application programming interface (API) layer according to an exemplary embodiment of the present invention; and

FIG. 15 is a flowchart illustrating a method of displaying a plurality of services that are displayed on respective corresponding logical screens on a display screen by the modules illustrated in FIG. 14 according to an exemplary embodiment of the present invention.

### Mode for Invention

Advantages and features of the present invention and methods of accomplishing the same may be understood more readily by reference to the following detailed description of exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

Before explaining the present invention, terms used in the specification will now be described briefly. However, it is noted that the use of any and all examples or exemplary terms provided herein is intended merely to better illuminate the invention and is not a limitation on the scope of the invention unless otherwise claimed.

The term 'service' indicates a group of multimedia contents, i.e., at least one of service components forms a single service.

Service components are elements of a service and include a video component, an audio component, and a data component. The video component and the audio component include video information and audio information, respectively. Further, the data component refers an application in a service and includes an application providing weather information, an application providing stock information, an application providing a subtitle or an electronic program guide (EPG).

The term 'service context' indicates an object which can control the executing of a service and includes various resources, devices, and execution state information needed for providing a service. It is possible to confirm the service components that are configuration elements of the service by the service context.

The term 'physical display device' indicates a physical device which actually displays the content of a service, an external output port to which the content is output, or a storage device in which the content is stored.

The term 'display screen' indicates a screen actually displayed on a physical display device. An arbitrary service may be directly set in the display screen, and the display screen may be displayed on a physical display device. Alternatively, at least one logical screen which is mapped to a certain area of the display screen may be displayed on the physical display device.

The term 'logical screen' indicates a space in which an arbitrary service is displayed. A logical screen is a virtual screen before being mapped to a display screen and thus is not displayed on a physical display device. Therefore, the logical screen can be output on a physical display device by being mapped to the display screen.

The logical screen and the display screen may be a combination of a background still image, a video raster, and a graphic raster. The graphic raster may be a combination of text, lines, colors, and images or a mixture of video frames.

The term 'main service' indicates a service that is selected as a main service through a menu displayed on the physical display device or a remote controller by a user or through an API by an application, and the screen on which the main service is displayed is referred to as a 'main screen'.

The term 'Picture-in-Picture service' (PIP service) indicates a service that is selected as a sub-service in the main service through a menu displayed on a physical display device or a remote controller by a user via an API by an application, and the PIP service may be displayed on a picture-in-picture screen (PIP screen) or a main screen.

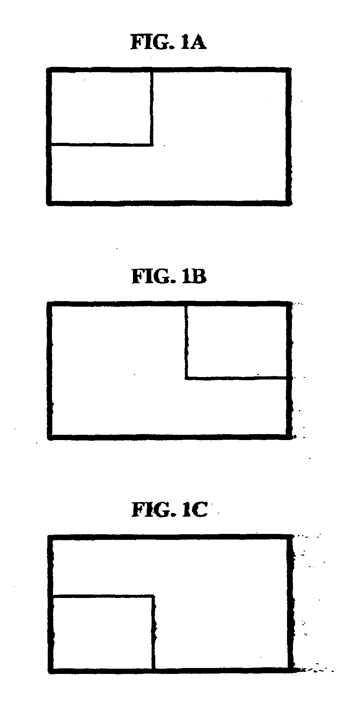

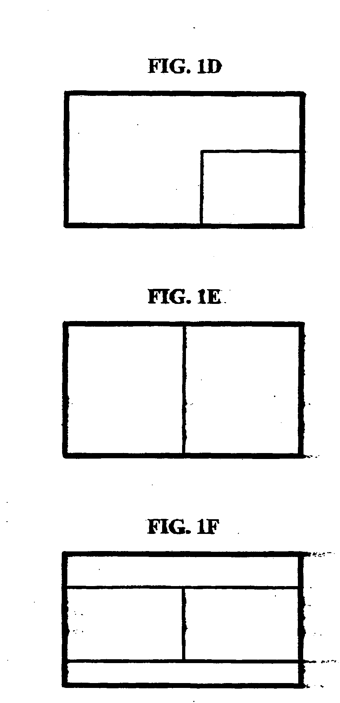

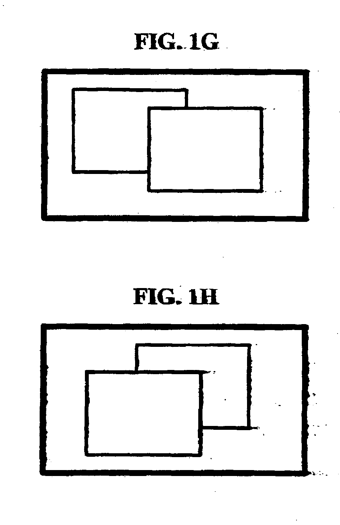

The PIP screen includes a screen that occupies a part of another screen as illustrated in FIGS. 1A to 1D and a screen that is simultaneously displayed with another screen without overlapping the other screen as illustrated in FIGS. 1E and 1F. In this case, it is understood that the PIP screen may include a screen that is displayed on an arbitrary location or area in the physical display device or overlaps another screen, as illustrated in FIGS. 1G and 1H.

The terms that have not been described in the foregoing description will be described as necessary. Hereinafter, exemplary embodiments will be described in detail with reference to accompanying drawings.

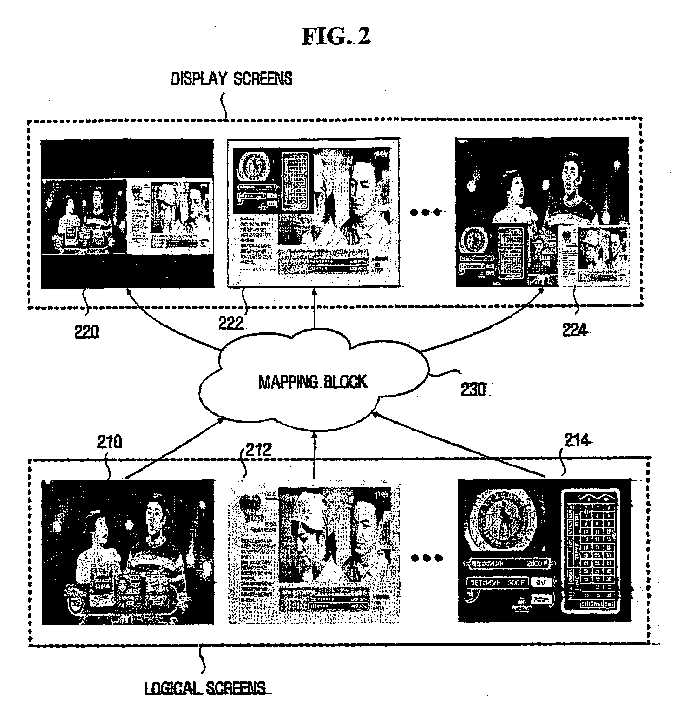

FIG. 2 is a diagram illustrating the relationship between a logical screen and a display screen according to an exemplary embodiment of the present invention.

Referring to FIG. 2, a service may be displayed using logical screens 210, 212, and 214. The logical screens 210, 212, and 214 are mapped to display screens 220, 222, and 224 through a mapping block 230.

In detail, the logical screens 210 and 212 are mapped to the display screen 220, the logical screens 212 and 214 are mapped to the display screen 222, and the logical screens 210, 212, and 214 are mapped to the display screen 224.

In short, at least one logical screen which displays a service is mapped to an arbitrary area of a display screen by the mapping block 230.

The mapping block 230 is a group of various pieces of information needed for mapping a logical screen to a display screen. Examples of the various pieces of information include coordinate information of a predetermined area on a display screen to which each of a plurality of logical screens is mapped, identification information of the logical screens and the display screen, and information specifying in what order the logical screens are displayed on the display screen.

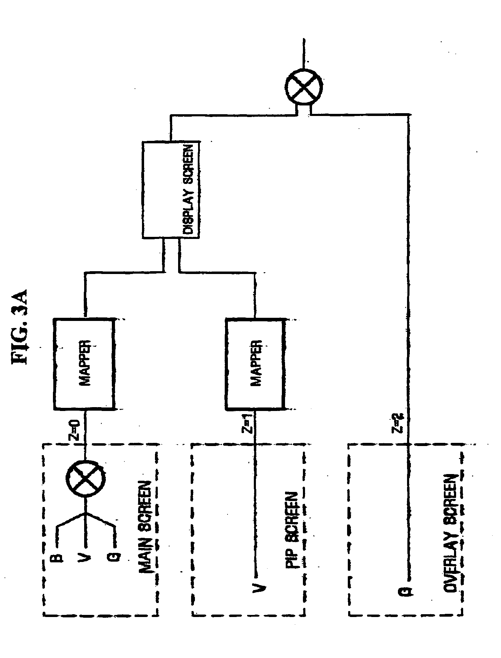

The mapping block 230 can change the size of the logical screen so to be allocated in an arbitrary area of the display screen. That is, the mapping block 230 can perform scaling of the logical screen and allocating of the position thereof, and FIGS. 3A to 3E are diagrams illustrating a configuration of the screen including a mapper as the mapping block.

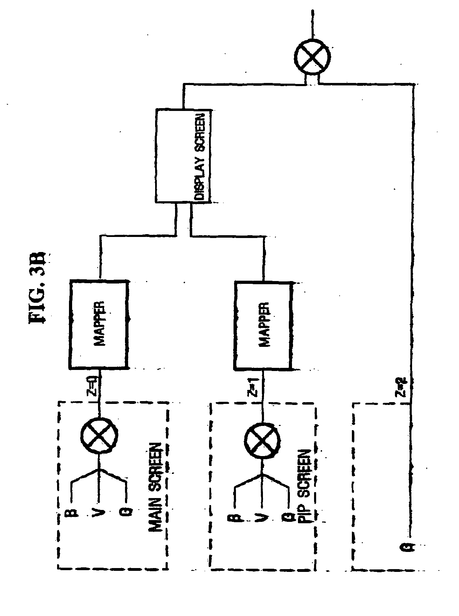

Referring to FIG. 3A, the main screen including a combination of a background still image B, a video raster V, and a graphic raster G is mapped to the entire display screen by a mapper with a normal size. The PIP screen including only video components is mapped to the entire display screen by the mapper with a reduced size. In this case, the mapped PIP screen is displayed on the main screen, which is determined depending on a Z value. The reference character Z refers to z-order value which will be described later. An overlay screen may be combined with the display screen. The overlay screen is a specific screen disposed at the outmost side, and may be used when providing a caption function. The PIP screen may have only a video component as illustrated in FIG. 3A, or may have a combination of the background still image B, the video raster V, and the graphic rater G as illustrated in FIG. 3B.

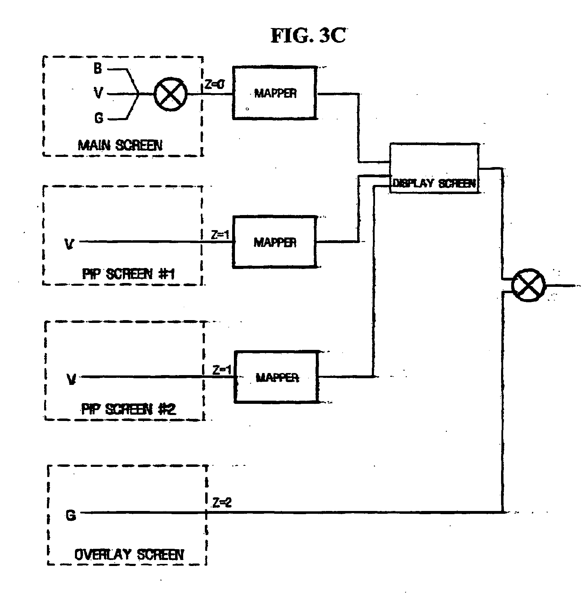

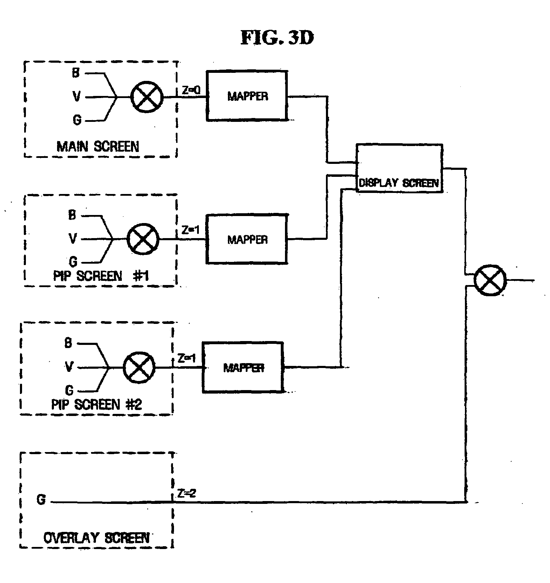

Referring to FIG. 3C, the main screen including the combination of the background still image B, the video raster V, and the graphic rater G is mapped to the entire display screen by the mapper with a normal size. Two PIP screens #1 and #2 having only video component is mapped to an arbitrary area of the display screen by the mapper with a reduced size. In this case, the mapped PIP screen is disposed on the main screen and the Z value can be constantly maintained. Further, the overlay screen may be combined with the display screen. The configuration of the screen may have a plurality of PIP screens including only video components as illustrated in FIG. 3C or a plurality of PIP screens including a combination of the background still image B, the video raster V, and the graphic rater G as shown in FIG. 3D.

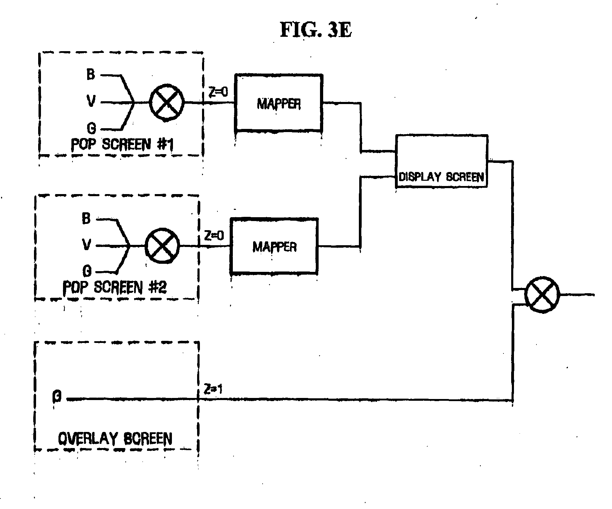

Picture Outside Picture (POP) screens are illustrated in FIG. 3E. It can be understood that the PIP screen is displayed inside the main screen and the POP screen is displayed outside the main screen. Referring to FIG. 3E, the plurality of PIP screens #1 and #2 including a combination of the background still image B, the video raster V, and the graphic rater G are mapped to arbitrary areas of the display screen by the mapper with a reduced size. In this case, the Z value of the mapped POP screens #1 and #2 may be constantly maintained. Further, the overlay screen may be combined with the display screen.

The mapping block 230 may be realized by interfaces or functions prepared by various computer program languages to be executed and create or change the relationship between the logical screen and the display screen by using the above information as parameters.

The mapping block 230 may also be realized by a hardware in order to function for mapping the logical screen to the display screen.

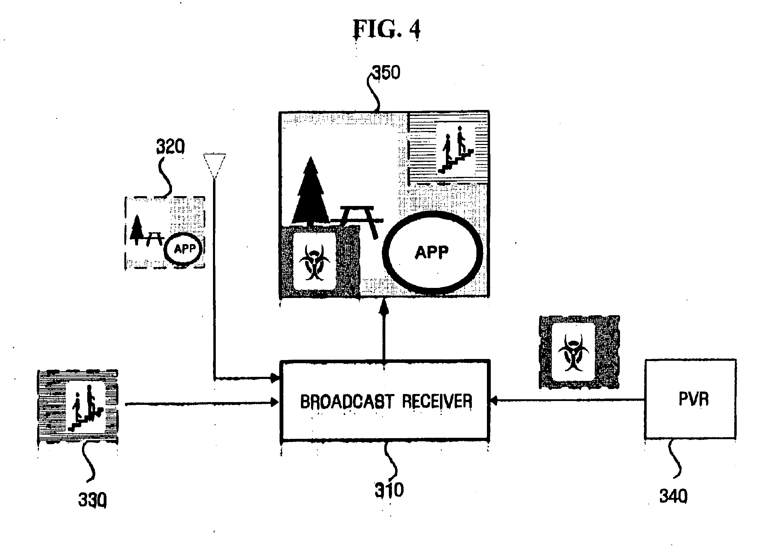

Further, services provided by various service sources may be displayed on a display screen, and the display screen may be displayed on a physical display device, as illustrated in FIG. 4.

There are service sources which provide broadcast services such as a terrestrial broadcaster 320 and a cable broadcaster 330, service sources which provide services stored in a storage medium such as a personal video recorder (PVR) 340, and service sources (not illustrated in FIG. 4) which provide services via a wired network or a wireless network.

A broadcast receiver 310 receives services from the service sources and produces logical screens displaying each of the received services.

Then, an arbitrary service is directly set on the display screen to be displayed on a physical display device using a predefined method or a method set by a user or an application. Otherwise, at least one logical screen that is mapped to an arbitrary area on the display screen is displayed on a physical display device 350. In short, services provided by the terrestrial broadcaster 320, the cable broadcaster 330, and the PVR are displayed on the physical display device 350.

The terrestrial broadcaster 320, the cable broadcaster 330, and the PVR 340 are illustrated in FIG. 4 as being service sources, but the present invention is not limited to it. Any type of multimedia content source which provides multimedia contents that can be displayed together can be a service source according to an exemplary embodiment of the present invention.

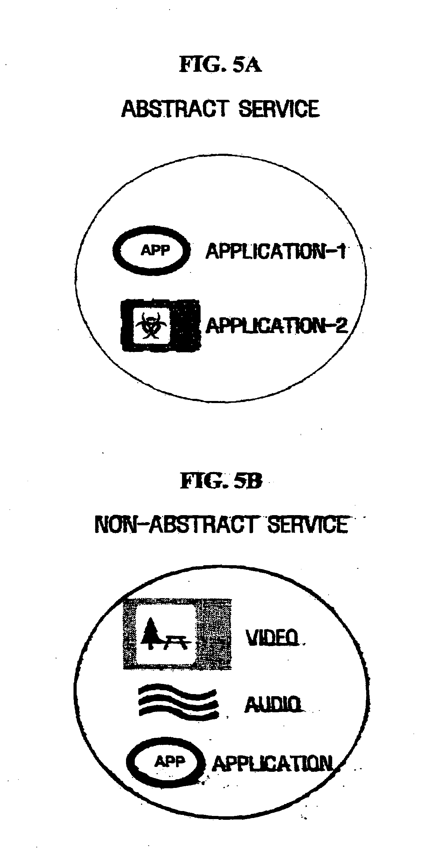

Services according to an exemplary embodiment of the present invention can be classified into abstract services and non-abstract services, as illustrated in FIGS. 5A and 5B.

The abstract services are not services provided by broadcast signals transmitted in real time but services independent of broadcast channels. The abstract services include only data components, i.e., applications, without video components and audio components. Examples of the abstract services include services having unbound applications based on the OCAP standard.

The non-abstract services are understood as services other than abstract services.

According to the current exemplary embodiment of the present invention, both abstract services and non-abstract services have independency. For example, abstract services may be directly set on the physical display device not through logical screens and non-abstract services may be displayed on the logical screens. Then, the logical screens may be mapped to the display screen in which the abstract services are set. Thereafter, the display screen may be output through the physical display device. By doing so, the abstract services can be displayed on the display screen independently of the non-abstract services. In addition, the abstract services and non-abstract services may be mapped to different logical screens. Thereafter, the logical screens may be mapped to a single display screen. In other words, the abstract services can be displayed on the display screen independently of non-abstract services.

According to the current exemplary embodiment of the present invention, the logical screen and the display screen may be categorized as being different objects. Alternatively, a screen may serve as a logic screen or a display screen according to attribute information of one screen object.

That is, it is possible to confirm whether the screen is a logical screen or a display screen, on the basis of type information among attribute information of the screen object.

Attribute information of the screen object includes a plurality of attributes 'z-Order', 'Display_Area', 'Visibility', 'Associated_Display_Screen', 'Associated_Service_Contexts', , and 'OutputPort'.

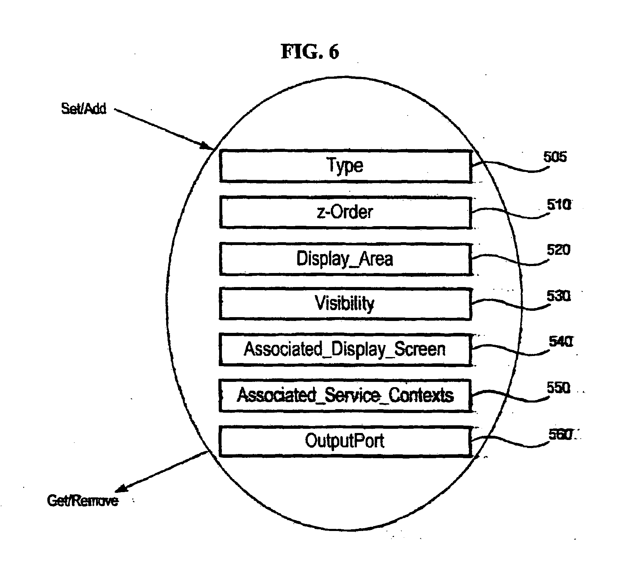

FIG. 6 illustrates the attribute information of the screen object and the type of interfaces that process the attribute information.

An attribute 'type' 505 is attribute information indicating whether the screen is a logical screen or a display screen.

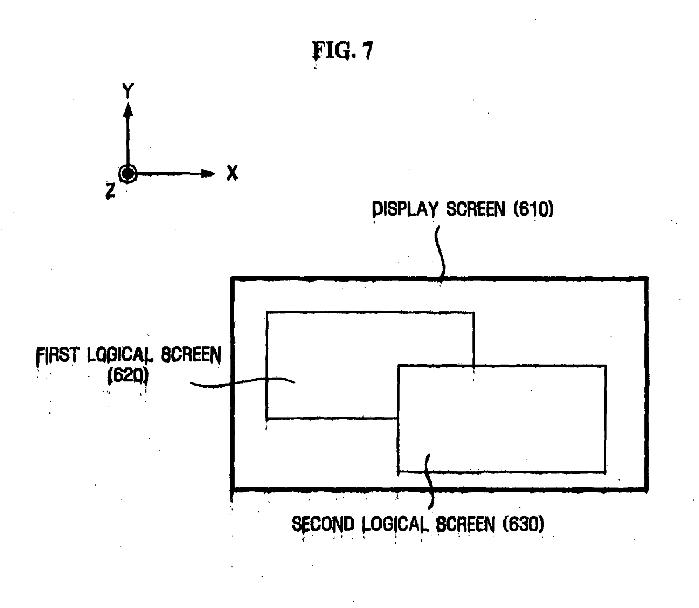

An attribute 'z-Order' 510 is for determining in what order a plurality of logical screens are arranged along the z-axis. FIG. 7 illustrates different a configuration of logical screens on a physical display device for combinations of the values of attributes 'z-Order of the logical screens,

Referring to FIG. 7, first and second logical screens 620 and 630 are respectively mapped to predetermined areas of a display screen 610. In detail, the first logical screen 620 is displayed on the display screen 610, and the second logical screen 630 is displayed on the display screen partially overlapping the first logical screen 620, In other words, the display screen 610, the first logical screen 620, and the second logical screen 630 are sequentially arranged in the direction of the z-axis. In this case, an attribute 'z-Order' of the first logical screen 620 may be set to a value of 1, and an attribute 'z-Order' of the second logical screen 630 may be set to a value of 2. The attributes 'z-Order' of the first and second logical screens 620 and 630 may be set to any numbers or characters as long as they can represent a certain order in which the fist and second logical screens 620 and 630 are to be arranged along the z-axis.

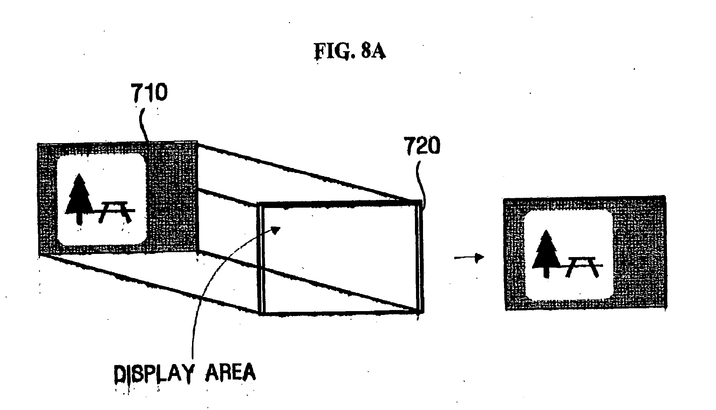

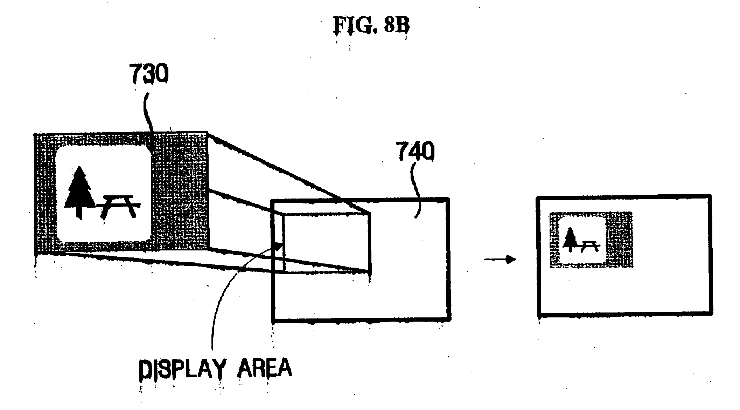

An attribute 'Display_Area' 520 is information regarding a display screen area of a logical screen, as to be illustrated in FIGS. 8 A and 8B.

FIG. 8 A illustrates that a logical screen 710 is mapped to an entire area of the display screen 720, and FIG. 8B illustrates that a logical screen 730 is mapped to a partial area of the display screen 740.

The attribute 'Display_Area' may include information specifying the two-dimensional coordinates of a predetermined portion of a display screen to which the logical screen is to be mapped or may include information specifying a predetermined location on the display screen and an offset value indicating how much the logical screen deviates from the predetermined location on the display screen.

An attribute 'Visibility' 530 determines whether a logical screen is to be visibly or invisibly displayed on a display screen. It is possible to make a logical screen appear on or disappear from a display screen by altering the value of the attribute 'Visibility' 530.

An attribute 'Associated_Display_Screen' 540 is information regarding display screens associated with a logical screen. A logical screen which is not associated with any display screens may not be displayed on a physical display device nor be transmitted to external output devices.

An attribute 'Associated_Service_Contexts' 550 is information regarding service contexts connected to a logical screen or a display screen. Services set in such service contexts may be displayed on a logical screen or a display screen.

An attribute 'OutputPort' 560 is information regarding devices by which a display screen is to be output, and such devices include display screens, wired/wireless communication medina, and various storage medina.

Interfaces for identifying or altering the values of the attributes illustrated in FIG. 6 may be provided. Referring to FIG. 6, the interfaces may include an interface 'SET' for setting attribute values or connecting a logical screen to a display screen, an interface 'ADD' for adding attribute values or connecting a logical screen to a service, an interface four identifying attribute values, and an interface 'REMOVE' for deleting attribute values. These interfaces may include processes, functions, procedures, or methods that perform their functions, respectively.

For example, a method 'getDisplayScreen(void)' returns a display screen associated with the current screen. In detail, if the current screen is a logical screen, the method 'getDisplayScreen(void)' returns the associated display screen. If the current screen is display screen, the method 'getDispIayScreen(void)' returns reference information regarding the current screen. Further, if the current screen is a logical screen, but there is no associated screen, the method 'getDisplayScreen(void)' returns a value of 'NULL',

According to another example, a method 'public void set-Display Area(HScreenRectangle react) throws SecurityException, IllealStateException' provides a function for mapping the current logical screen to a predetermined area of the associated display screen. An instance that is provided as a parameter is of a class 'HScreenRectangle' of a package 'org.havl.ui', and has two-dimensional position information. The execution of the methods 'SecurityException' and 'IllegalStateException' may be conducted as an exceptional operation for the method 'setDisplayScreen(HScreen screen)'. The method 'IllegalStateException' may be executed when the current screen is a logical screen or when a portion of a display screen associated with a current logical screen cannot change due to the characteristics of a host platform.

According to still another example, a method 'getDisplayArea(void)' returns regional information of a current screen as HScreenRectangle information. If the current screen corresponds to a display screen, the method 'getDisplayArea(void)' returns HScreenRectangle information having the same value as HScreenRectangle (0,0,1,1). If the current screen is a logical screen, the method 'getDisplayArea(void)' returns information regarding an area on a display screen occupied by the current screen. If the current screen is a logical screen but is not associated with any display screen, the method 'gctDisplayArea(void)' returns a value NULL'.

Certain terms are used throughout the following description to refer to particular interfaces. However, one skilled in the art will appreciate that a particular function is named simply to indicate its functionality. This detailed description of the exemplary embodiments does not intend to distinguish between functions that differ in name but not function.

By associating a service context with a screen, it is possible to display contents in the service on the screen. Hereinafter, the operation of associating the service context with the screen refers service selection. In this case, one screen may be associated with a plurality of service contexts. The service can be displayed through the service selection operation.

A service context used for the service selection may be for an abstract service or a non-abstract service. Further, a screen used for the service selection may be a logical screen or a display screen.

A device (for example, a multiple screen providing device 700 which will bye described later) in which this invention is embodied has a limited service selection operation due to a hardware or software limitation.

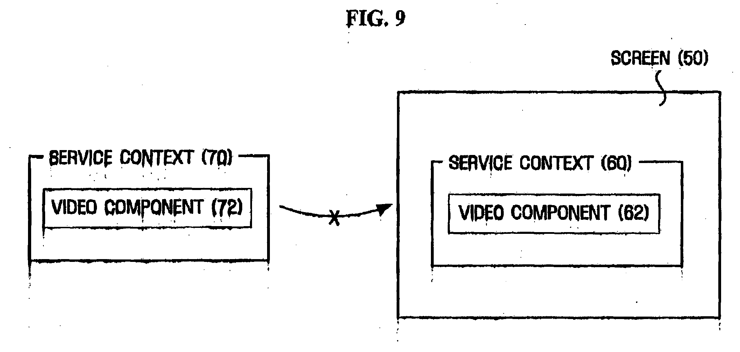

For example, when the service context is for a non-abstract service, there is a limitation that does not allow a plurality of service contexts to be associated with the same screen. This limitation is for reducing the complexity occurred when two or more video components and background components are displayed on one screen. If the same kind of service components is allocated to a screen, it is difficult to specify a service component to be displayed on the screen. For example, as illustrated in FIG. 9, when a service context 60 that is previously associated with a screen 50 includes a video component 62, another service context 70 including a new video component 72 is not allowed to be associated with the screen 50.

Further, a plurality of service contexts for the abstract service can be associated with a single screen. For example, in a state when a first application that supplies stock information is connected to the screen, a second application that supplies weather information can be additionally connected thereto.

In this exemplary embodiment, in order to perform a service selection operation using an application, the interfaces described with reference to FIG. 6 can be used. More specifically, a method 'addServiceContext(ServiceContext)' is provided to perform association between the service context and the screen. For example, when a screen is displayed on a physical display device, a content of a given service context is displayed on a corresponding screen of the physical display device. When the service context is associated with the screen, it is necessary to determine whether the service can be displayed on the screen, that is, whether the service selection operation is restricted due to the aforementioned limitation, in advance.

Meanwhile, a method 'removeServiceContext(ServiceContext) removes the association performed by a method 'addServiceContext(ServiceContext). Further, a method 'getServiceContext(Service Context) determines service contexts that are associated with screens by means of the service selection operation.

In this exemplary embodiment, a method 'checkServiceContext(ServiceContext)' is provided to check whether a predetermined service context can be associated with a predetermined screen.

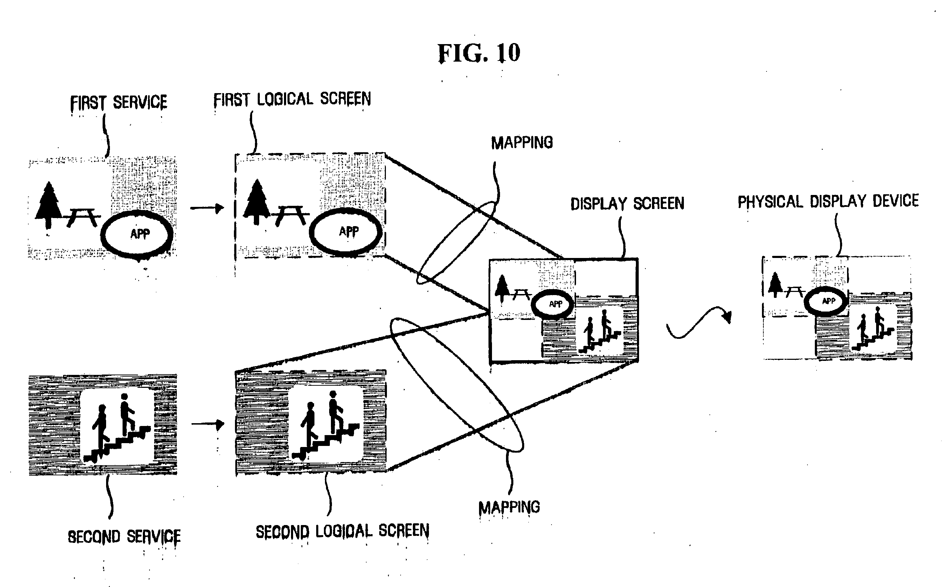

FIG. 10 is a diagram illustrating a process that two services are set on two logical screens to be mapped to a single display screen.

Referring to FIG. 10, a first service includes all the three service components, i.e., video, audio, and data components, and a second service includes only video and audio components. However, the present invention does not impose any restrictions on service components, and the first and second services illustrated in FIG. 8 are exemplary.

As illustrated in FIG. 10, the first and second services are displayed on a physical display device in almost the same manner as in the related art. According to the current exemplary embodiment of the present invention, it is possible to display a plurality of services on a physical display device independently of one another without imposing any restrictions on the number of services that can be displayed on a single display screen.

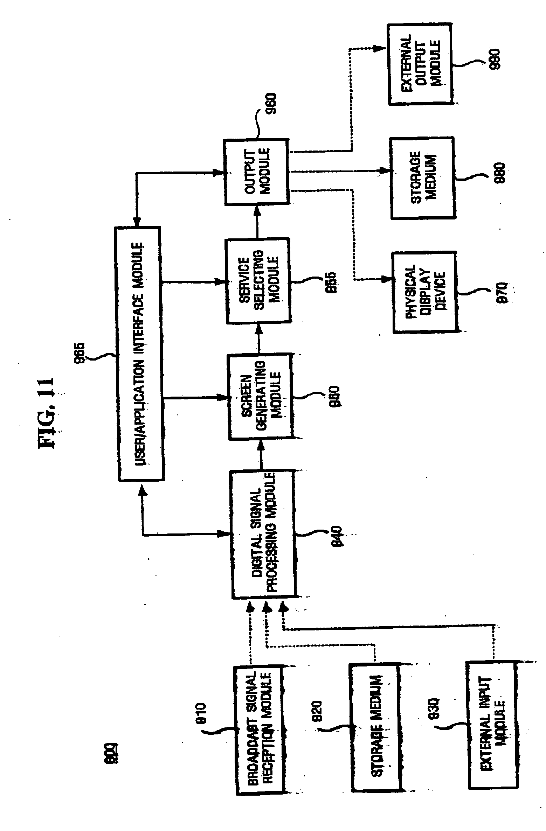

FIG. 11 is a block diagram of an apparatus for providing multiple screens according to an exemplary embodiment of the present invention.

Referring to FIG. 11, an apparatus 900 for providing multiple screens includes a digital signal processing module 940, a screen generating module 950, a service selecting module 955, an output module 960, and a user/application interface module 965.

Also, the apparatus 900 includes a broadcast signal reception module 910, a storage medium 920. and an external input module 930 as service sources, and includes a physical display device 970, a storage medium 980, and an external output module 990 as service output media.

The term 'module', as used herein, means, but is not limited to, a software or hardware component, such as a Field Programmable Gate Array (FPGA) or an Application Specific Integrated Circuit (ASIC), which performs certain tasks. A module may advantageously be configured to reside on the addressable storage medium and configured to be executed on one or more processors. Thus, a module may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and modules may be combined into fewer components and modules or further separated into additional components and modules.

The digital signal processing module 940 receives various information of a service such as a multimedia content, e.g., video information, audio information, or data information, from the broadcast signal reception module 910, the storage medium 920, or the external input module 930.

The broadcast signal reception module 910 receives a satellite, terrestrial, or cable broadcast signal and transmits the received broadcast signal, the storage medium 920 stores video information, audio information, or data information of a service, and the external input module 930 receives video information, audio information, or data information of a service from an external device such as a network interface module connected to a network.

The digital signal processing module 940 restores a plurality of services using received service components. The restored services include abstract or non-abstract services.

Here, the phrase 'a plurality of services' refers to two or more services transmitted by the broadcast signal reception module 910 or two or more services respectively transmitted by the broadcast signal reception module 910 and the storage medium 920.

The digital signal processing module 940 may restore services according to selection by a user or an application with the aid of the user/application interface module 965. In this case, the user or the application may select the connection between an arbitrary service and a screen.

The screen generating module 950 generates a logical screen and a display screen to display a service restored by the digital signal processing module 940.

The service selecting module 955 performs the aforementioned service selection operation. In detail, the service selecting module 955 determines whether an arbitrary service can be displayed on a screen. If the service can be displayed, the service selecting module 955 can display the service on the screen. In contrast, if the service can not be displayed on the screen, the service selecting module 955 outputs a message informing that the service can not be displayed on the screen. This message may include a sound signal to be transmitted to a user through a speaker (not illustrated), or include an image signal to be displayed on the physical display device 970. Therefore, it is possible to confirm whether a desired service is displayed on a specific screen.

A service to be displayed and a screen that displays the service can be determined by the selection of the user or the application via the user/application interface module 965. It is further possible to perform service selection on the PIP screen or POP screen.

The output module 960 maps at least one of logical screens produced by the screen generating module 950 to the display screen. The mapping area of the logical screens to the display screen may be conducted using a predefined method or a method set by the user with the aid of the user/application interface module 965.

A service restored by the digital signal processing module 940 may not be processed by the screen generating module 950. Instead, a service restored by the digital signal processing module 940 may be directly mapped to a certain portion of a display screen produced by the output module 960.

A display screen provided by the output module 960 may be displayed on the physical display device 970 or may be stored in the storage medium 980. Examples of the storage medium 980 include computer readable floppy discs, hard discs, CD-ROM. DVD, DVD-ROM, BD (Blu-ray Disc), and semiconductor memories.

Also, a display screen provided by the output module 960 may be transmitted to an external device connected to a network via the external output module 990.

For this, the output module 960 may include a plurality of output ports via which a display screen can be provided. In this case, a display screen can be provided via an output port set in advance as a default or an output port chosen by the user with the aid of the user/application interface module 965.

The user or the application can choose one of a plurality of services or restore desired services using the user/application interface module 965. Also, the user can choose one of a plurality of display screens using the user/application interface module 965.

Since the modules illustrated in FIG. 11 are divided according to their functions, it is possible to be connected to the other modules.

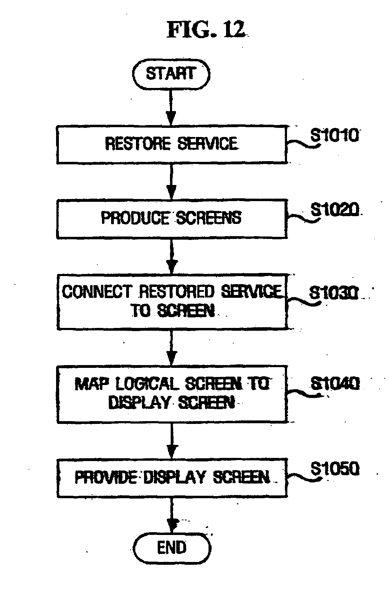

FIG. 12 is a flowchart illustrating a method of dynamically configuring multiple screens according to an exemplary embodiment of the present invention.

In general, video information, audio information, and data information constituting a multimedia content are transmitted in a predetermined format, for example, an MPEG stream format. In operation S1010, the digital signal processing module 940 receives video information, audio information, and data information and restores a service based on the video information, the audio information, and the data information. Here, the service restored in operation S1010 may be selected or previously determined by a user or an application. The user may use a menu displayed on the display device or a remote controller to select the connections between an arbitrary screen and a screen. The application may select the connections using an API.

Further, data information includes application information regarding application program for a service, and these application information includes signal information indicating whether the application program can be executed on a PIP screen. Examples of the application information include an application information table (AIT) based on the MHP standard and an extended application information table (XAIT) based on the OCAP standard. The signal information may be added to the application information.

Thereafter, in operation S1020, the screen generating module 950 generates screens displaying restored services. Thereafter, in operation S1030, the service selecting module 955 connects the restored services to the screens generated by the screen generating module 950. This connection operation can be understood as the association operation of the service contest and the screen.

The screens generated in operation S1020 include logical screens and a display screen. The output module 960 maps the logical screens to the display screen in operation S1040, and then, provides the display screen though a physical display device, a storage medium or a network in operation S1050. The output module 960 can provide a display screen having a service connected by the service selecting module 955 even without mapping the logical screens.

Although not illustrated in FIG. 12, in operation S 1030, the service selecting module 955 determines whether the service context can be associated with the screen, and then, on the basis of the determined result, the service selecting module 955 connects the service context to the screen or outputs a signal indication that the service context can not be connected to the screen.

When the user selects the PIP service, the PIP service is realized in two modes. In the first mode, only video component for PIP service selected on the main screen is provided without creating a separate logical screen for PIP service, that is, PIP screen. In the second mode, a separate logical screen for PIP service is created to provide the PIP service selected on the created PIP screen.

FIG. 12 illustrates a method of mapping only one service to a display screen for simplicity. However, a plurality of services may be mapped to a display screen with or without passing through a plurality of logical screens.

When a display screen is provided to the user in this manner, the user can perform a plurality of services.

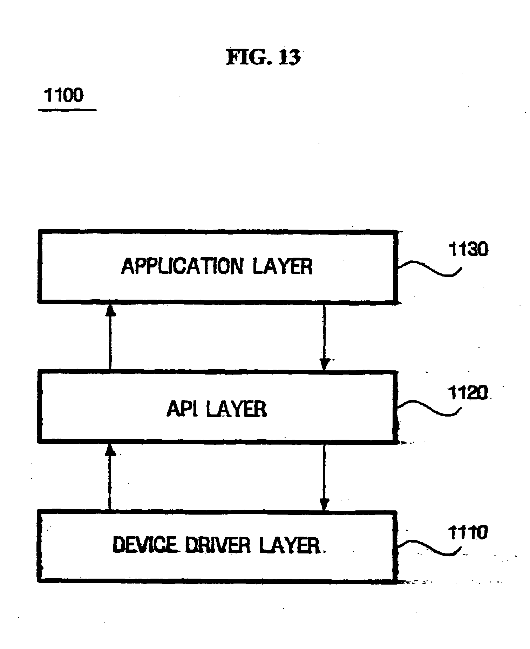

FIG. 13 is a diagram illustrating a software architecture for providing multiple screens according to an exemplary embodiment of the present invention.

Referring to FIG. 13, a software architecture 1100 includes a device driver layer 1110, an API layer 1120, and an application layer 1130.

The device driver layer 1110 receives service components from various multimedia content sources and decodes the received service components. Examples of the received service components include video information, audio information, and data information.

The API layer 1120 generates a logical screen and a display screen and maps a service, the logical screen, and the display screen to one another.

The application layer 1130 provides a user interface so that a user can dynamically configure a logical screen which displays a service or transmits a user command to the API layer 1120 so that the API layer 1120 can execute the user command.

The user enables the device driver layer 1110 with the aid of the application layer 1130 to provide a display screen via a physical display device or to store the display screen in a storage medium. In addition, the user can enable the device driver layer 1110 to transmit a display screen to an external device via a network.

For this, the device driver layer 1110 may include a plurality of output ports which can provide a display screen. Otherwise, API layer 1120 may include the plurality of output ports.

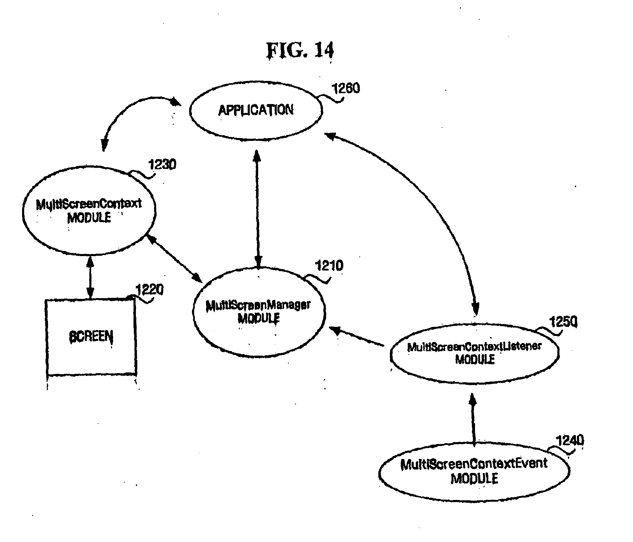

In order to dynamically configure a plurality of logical screens on a display screen, the APT layer 1120 may include a plurality of software modules, e.g., a multiscreen manager module 'MultiScreenManager' 1210, a multiscreen context module Multi- ScreenContext' 1230, a multiscreen context listener module' MultiScreenContextListener' 1250, and a multiscreen context event module' MultiScreenContextEvent' 1240, as illustrated in FIG. 14.

The multiscreen manager module 1210 manages the multiscreen context module 1230, searches for a desired screen, displays information specifying what devices are shared by screens, registers the multiscreen context listener module 1250, or cancels the registration of the screen context listener module 1250.

The multiscreen context module 1230 is an interface object associated with a screen object 1220 and determines whether the screen object 1220 is to become a logical screen or a display screen according to an interface operation performed by the multiscreen context module 1230. Various attributes such as the attributes 510 through 570 illustrated in FIG. 6 may be set in the multiscreen context module 1230. The multiscreen context module 1230 can provide the functions 'SET', 'ADD', 'GET', and 'REMOVE' described above with reference to FIG. 6.

When attribute information of the screen object 1220 is altered by the multiscreen context module 1230, the multiscreen context event module 1240 serves as an event class announcing that the attribute information of the screen object 1220 has been changed, and the multiscreen context listener module 1250 serves as a listener interface object which can be realized in a predetermined application class which attempts to receive an event prompted by the multiscreen context event module 1240.

An application 1260 is a module which is driven on the application layer 1130. The application 1260 allows the user to choose a desired service and to freely arrange a plurality of logical screens on a display screen.

In detail, the application 1260 transmits various commands which allow the user to dynamically configure and manage logical screens to the multiscreen manager module 1210, and the multiscreen manager module 1210 controls operations corresponding to the various commands to be executed through the multiscreen context module 1230.

The multiscreen context module 1230 is associated with the screen object 1220 and manages the attribute information of the screen object 1220 illustrated in FIG. 6. In order to manage the attribute information of the screen object 1220, the multiscreen context module 1230 may include a variety of functions or methods.

The multiscreen manager module 1210 receives service components provided by various service sources from the device driver layer 1110 and performs operations to display the received service components on a logical screen or a display screen.

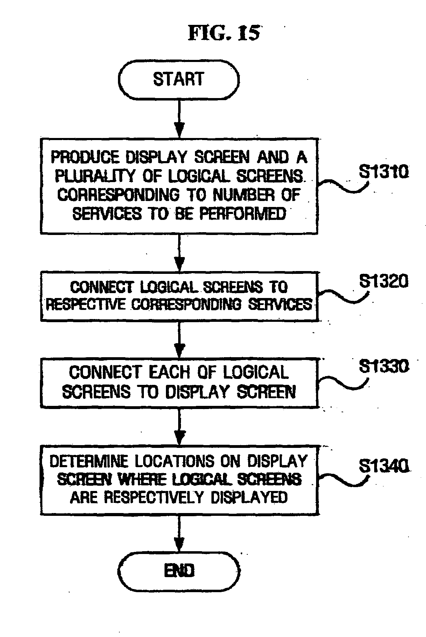

FIG. 15 is a flowchart illustrating a method of displaying a plurality of services displayed on respective corresponding logical screens by the modules illustrated in FIG. 14 on a display screen according to an exemplary embodiment of the present invention.

Referring to FIG. 15, in operation S1310, the multiscreen manager module 1210 produces a display screen and a number of logical screens corresponding to the number of services to be performed.

In operation S 1320, the multiscreen manager module 1210 connects the logical screens to respective corresponding services received from the device driver layer 1110. The multiscreen manager module 1210 may call a method 'addServiceContext' for each of the logical screens by setting service context objects of the received services as parameters for the logical screens services. The method 'addServiceContext' connects a logical screen to a service and may be provided by the multiscreen context module 1230.

In operation S1330, once the logical screens are connected to the respective services, the multiscreen manager module 1210 connects the logical screens to the display screen. At this time, the multiscreen manager module 1210 may call a method 'setDisplayScreen' for each of the logical screens by setting a display screen object to which the logical screens are connected as a parameter. The method 'setDisplayScreen' connects a logical screen to a display screen and may be provided by the multiscreen context module 1230.

A method 'setDisplayScreen' may be set to 'public void setDisplayScreen (HScreen screen) throws SecurityException, Illegal StateException', and this method allows an instance 'HScreen' that is provided as a parameter to be associated with the current logical screen. In this case, the instance 'HScreen' is preferably a display screen.

A parameter of the method 'setDisplayScreen(HScreen screen)' may include a value of 'NULL'. In this case, when the method 'setDisplayScreen(HScreen screen)' is executed without exception handling, the current logical screen is no longer associated with the display screen.

The execution of the methods 'SecurityException' and 'IllegalStateException' may be conducted as an exceptional operation for the method 'setDisplayScreen(HScreen screen)'.

The method 'IllegalStateException' may be executed when a current screen is a logical screen or when a portion of a display screen associated with a current logical screen cannot change due to the characteristics of a host platform.

In operation S1340, areas on the display screen to which the logical screens are to be respectively mapped are determined. At this time, a predetermined method provided by the multiscreen context module 1230 can be called to determine an area on the display screen where the logical screens are to be displayed.

### Industrial Applicability

According to the present invention, it is possible to perform a plurality of services provided by various sources such as cable broadcasts, terrestrial broadcasts, various storage media, and external inputs, in various manners using a single physical display screen.

## Claims

1. An apparatus (900) for providing multiple screens, the apparatus comprising:
a screen generating module (950) which generates the multiple screens, including a logical screen(210, 212, 214) and a display screen(220, 222, 224) for displaying a service;
a service selecting module (955) which connects the service to the logical screen(210, 212, 214) generated by the service generating module; and
an output module (960) which maps the logical screen(210, 212, 214) to an arbitrary location of the display screen(220, 222, 224) and includes a plurality of output ports via which the display screen(220, 222, 224) is provided to a physical display screen (970), **characterized in that:**
the service comprises data information, the data information comprises application information regarding application program for the service, the application information includes information indicating whether the application program can be executed on a picture-in-picture screen and the service selecting module (955) determines from the application information whether the service can be displayed on the physical screen.

2. The apparatus (900) of claim 1, wherein the service selecting module (955) associates a service context that indicates information of the service with the screen.

3. The apparatus (900) of claim 1, wherein the service selecting module (955) determines whether the service can be displayed on the screen and connects the service to the screen on based on a determination result.

4. The apparatus (900) of claim 3, wherein the service selecting module (955) determines whether the service can be displayed on the screen if the service is a non-abstract service.

5. The apparatus (900) of claim 3, wherein the service selecting module (955) blocks connection between the screen and the service if a first service component, being an element of a service, of the service and a second service component that is previously associated with the screen are a same type.

6. The apparatus (900) of claim 1, further comprising:
at least one of a physical display device (970) which outputs the display screen(220, 222, 224), a storage medium (980) which stores the display screen(220, 222, 224), and an external output module (990) which transfers the display screen(220, 222, 224) to an external device.

7. The apparatus (900) of claim 1, wherein the service selecting module (955) disconnects the service from the screen in response to a request of a user or an application.

8. The apparatus (900) of claim 1, further comprising:
an interface module (965) which receives a request for connection between the service and the screen from a user or an application

9. The apparatus (900) of claim 1, wherein the service comprises video information, audio information, and data information.

10. The apparatus (900) of claim 9, wherein the video information, the audio information, or the data information is provided by a broadcast signal, a storage medium, or a network.

11. The apparatus (900) of any proceeding claim, wherein the screen generating module (950) generates a plurality of screens for displaying a plurality of services and;
the service selecting module (955) connects the plurality of services to the plurality of screens generated by the screen generating module (950).

12. A method of dynamically configuring multiple screens, the method comprising:
generating the multiple screens, including a logical screen and a display screen for displaying a predetermined service;
connecting the service to the logical screen;
mapping the logical screen to an arbitrary location of the display screen; and
providing the display screen via a plurality of output ports to a physical display screen; **characterized in that**:
the service comprises data information, the data information comprises application information regarding application program for the service, the application information includes information indicating whether the application program can be executed on a picture-in-picture screen, and the connecting further determines from the application information whether the service can be displayed on the physical screen.

13. The method of claim 12, wherein the connecting the service to the screen comprises associating a service context that indicates information of the service with the screen.

14. The method of claim 12, wherein the connecting the service to the screen comprises:
determining whether the service can be displayed on the screen; and
connecting the service to the screen based on a result of the determining.

15. The method of claim 14, the determining comprises determining whether the service can be displayed on the screen if the service is a non-abstract service.

16. The method of claim 14, wherein the determining comprises blocking connection between the screen and the service if a first service component, being an element of a service, of the service and a second service component that is previously associated with the screen are a same type.

17. The method of claim 12, further comprising outputting the display screen to at least one of a physical display device, a storage medium, and an external output module.

18. The method of claim 12, further comprising disconnecting the service from the screen in response to a request of a user or an application.

19. The method of claim 12, wherein the service comprises video information, audio information, and the data information and provided by a broadcast signal, a storage medium, or a network.

20. The method of any one of calims 12 to 19, wherein the method comprises:
generating a plurality of screens for displaying a plurality of services and connecting the plurality of services to the plurality of screens generated.

## Patentansprüche

1. Vorrichtung (900) zum Bereitstellen von mehreren Bildschirmen, wobei die Vorrichtung Folgendes umfasst:
ein Bildschirmerzeugungsmodul (950), das die mehreren Bildschirme erzeugt, darunter ein logischer Bildschirm (210, 212, 214) und ein Anzeigebildschirm (220, 222, 224) zum Anzeigen eines Dienstes;
ein Dienstauswahlmodul (955), das den Dienst mit dem durch das Diensterzeugungsmodul erzeugten logischen Bildschirm (210, 212, 214) verbindet; und
ein Ausgabemodul (960), das den logischen Bildschirm (210, 212, 214) auf einen beliebigen Ort auf dem Anzeigebildschirm (220, 222, 224) abbildet und mehrere Ausgangsports umfasst, über die der Anzeigebildschirm (220, 222, 224) einem physischen Anzeigebildschirm (970) zugeführt wird; **dadurch gekennzeichnet, dass**
der Dienst Dateninformationen umfasst, die Dateninformationen Anwendungsinformationen in Bezug auf ein Anwendungsprogramm für den Dienst umfasst, die Anwendungsinformationen Informationen umfassen, die angeben, ob das Anwendungsprogramm auf einem Bild-im-Bild-Bildschirm ausgeführt werden kann und das Dienstauswahlmodul (955) aus den Anwendungsinformationen bestimmt, ob der Dienst auf dem physischen Bildschirm angezeigt werden kann.

2. Vorrichtung (900) nach Anspruch 1, wobei das Dienstauswahlmodul (955) einen Dienstkontext, der Informationen des Dienstes angibt, mit dem Bildschirm assoziiert.

3. Vorrichtung (900) nach Anspruch 1, wobei das Dienstauswahlmodul (955) bestimmt, ob der Dienst auf dem Bildschirm angezeigt werden kann, und den Dienst auf der Basis eines Bestimmungsergebnisses mit dem Bildschirm verbindet.

4. Vorrichtung (900) nach Anspruch 3, wobei das Dienstauswahlmodul (955) bestimmt, ob der Dienst auf dem Bildschirm angezeigt werden kann, wenn der Dienst ein nicht abstrakter Dienst ist.

5. Vorrichtung (900) nach Anspruch 3, wobei das Dienstauswahlmodul (955) die Verbindung zwischen dem Bildschirm und dem Dienst blockiert, wenn eine erste Dienstkomponente, die ein Element eines Dienstes ist, des Dienstes und eine zweite Dienstkomponente, die zuvor mit dem Bildschirm assoziiert war, von einem selben Typ sind.

6. Vorrichtung (900) nach Anspruch 1, ferner umfassend:
mindestens eine physische Anzeigeeinrichtung (970), die den Anzeigebildschirm (220, 222, 224) ausgibt, ein Speichermedium (980), das den Anzeigebildschirm (220, 222, 224) speichert, und ein Externausgabemodul (990), das den Anzeigebildschirm (220, 222, 224) zu einer externen Einrichtung übermittelt.

7. Vorrichtung (900) nach Anspruch 1, wobei das Dienstauswahlmodul (955) den Dienst als Reaktion auf eine Anforderung eines Benutzers oder einer Anwendung von dem Bildschirm trennt.

8. Vorrichtung (900) nach Anspruch 1, ferner umfassend:
ein Schnittstellenmodul (965), das eine Anforderung einer Verbindung zwischen dem Dienst und dem Bildschirm von einem Benutzer oder einer Anwendung empfängt.

9. Vorrichtung (900) nach Anspruch 1, wobei der Dienst Videoinformationen, Audioinformationen und Dateninformationen umfasst.

10. Vorrichtung (900) nach Anspruch 9, wobei die Videoinformationen, die Audioinformationen oder die Dateninformationen durch ein Ausstrahlungssignal, ein Speichermedium oder ein Netzwerk bereitgestellt werden.

11. Vorrichtung (900) nach einem der vorhergehenden Ansprüche, wobei das Bildschirmerzeugungsmodul (950) mehrere Bildschirme zum Anzeigen mehrerer Dienste erzeugt; und
das Dienstauswahlmodul (955) die mehreren Dienste mit den mehreren durch das Bildschirmerzeugungsmodul (950) erzeugten Bildschirmen verbindet.

12. Verfahren zum dynamischen Konfigurieren mehrerer Bildschirme, mit den folgenden Schritten:
Erzeugen der mehreren Bildschirme, darunter ein logischer Bildschirm und ein Anzeigebildschirm zum Anzeigen eines vorbestimmten Dienstes;
Verbinden des Dienstes mit dem logischen Bildschirm;
Abbilden des logischen Bildschirms auf eine beliebige Stelle des Anzeigebildschirms; und Zuführen des Anzeigebildschirms über mehrere Ausgangsports zu einem physischen Anzeigebildschirm; **dadurch gekennzeichnet, dass** der Dienst Dateninformationen umfasst, die Dateninformationen Anwendungsinformationen in Bezug auf ein Anwendungsprogramm für den Dienst umfassen, die Anwendungsinformationen Informationen umfassen, die angeben, ob das Anwendungsprogramm auf einem Bild-im-Bild-Bildschirm ausgeführt werden kann, und das Verbinden aus den Anwendungsinformationen ferner bestimmt, ob der Dienst auf dem physischen Bildschirm angezeigt werden kann.

13. Verfahren nach Anspruch 12, wobei das Verbinden des Dienstes mit dem Bildschirm das Assoziieren eines Dienstkontexts, der Informationen des Dienstes angibt, mit dem Bildschirm umfasst.

14. Verfahren nach Anspruch 12, wobei das Verbinden des Dienstes mit dem Bildschirm Folgendes umfasst:
Bestimmen, ob der Dienst auf dem Bildschirm angezeigt werden kann; und
Verbinden des Dienstes mit dem Bildschirm auf der Basis eines Ergebnisses des Bestimmens.

15. Verfahren nach Anspruch 14, wobei das Bestimmen umfasst, zu bestimmen, ob der Dienst auf dem Bildschirm angezeigt werden kann, wenn der Dienst ein nicht abstrakter Dienst ist.

16. Verfahren nach Anspruch 14, wobei das Bestimmen das Blockieren der Verbindung zwischen dem Bildschirm und dem Dienst umfasst, wenn eine erste Dienstkomponente, die ein Element eines Dienstes ist, des Dienstes und eine zweite Dienstkomponente, die zuvor mit dem Bildschirm assoziiert war, von einem selben Typ sind.

17. Verfahren nach Anspruch 12, ferner mit dem Schritt des Ausgebens des Anzeigebildschirms an mindestens eine der folgenden Alternativen: eine physische Anzeigeeinrichtung, ein Speichermedium und ein Externausgabemodul.

18. Verfahren nach Anspruch 12, ferner mit dem Schritt des Trennens des Dienstes von dem Bildschirm als Reaktion auf eine Anforderung eines Benutzers oder einer Anwendung.

19. Verfahren nach Anspruch 12, wobei der Dienst Videoinformationen, Audioinformationen und Dateninformationen umfasst, die durch ein Ausstrahlungssignal, ein Speichermedium oder ein Netzwerk bereitgestellt werden.

20. Verfahren nach einem der Ansprüche 12 bis 19, wobei das Verfahren den folgenden Schritt umfasst: Erzeugen mehrerer Bildschirme zum Anzeigen mehrerer Dienste und Verbinden der mehreren Dienste mit den mehreren erzeugten Bildschirmen.

## Revendications

1. Appareil (900) destiné à fournir des écrans multiples, l'appareil comprenant :
un module (950) générateur d'écrans qui génère les écrans multiples, comprenant un écran logique (210, 212, 214) et un écran d'affichage (220, 222, 224) destiné à afficher un service ;
un module (955) de sélection de service qui connecte le service à l'écran logique (210, 212, 214) généré par le module générateur de service ; et
un module de sortie (960) qui projette l'écran logique (210, 212, 214) vers un emplacement quelconque de l'écran d'affichage (220, 222, 224) et comprend une pluralité de ports de sortie par l'intermédiaire desquels l'écran d'affichage (220, 222, 224) est fourni à un écran d'affichage physique (970) ; **caractérisé en ce que** :
le service comprend des informations de données, les informations de données comprennent des informations d'applications concernant le programme d'application destiné au service ; les informations d'applications comprennent des informations indiquant si le programme d'application peut être exécuté sur un écran d'incrustation d'image et le module de sélection de service (955) détermine à partir des informations d'applications si le service peut être affiché sur l'écran physique.

2. Appareil (900) selon la revendication 1, dans lequel le module de sélection de service (955) associe à l'écran un contexte de service qui indique des informations du service.

3. Appareil (900) selon la revendication 1, dans lequel le module (955) de sélection de service détermine si le service peut être affiché sur l'écran et connecte le service à l'écran sur la base d'un résultat de détermination.

4. Appareil (900) selon la revendication 3, dans lequel le module (955) de sélection de service détermine si le service peut être affiché sur l'écran si le service est un service non abstrait.

5. Appareil (900) selon la revendication 3, dans lequel le module (955) de sélection de service bloque la sélection entre l'écran et le service si un premier composant du service, qui est un élément d'un service, et si un second composant de service, qui est préalablement associé à l'écran, sont du même type.

6. Appareil (900) selon la revendication 1, comprenant en outre :
au moins l'un d'un dispositif (970) d'affichage physique qui délivre l'écran d'affichage (220, 222, 224), d'un support de stockage (980) qui stocke l'écran d'affichage (220, 222, 224), et d'un module (990) de sortie externe qui transfère l'écran d'affichage (220, 222, 224) à un dispositif externe.

7. Appareil (900) selon la revendication 1, dans lequel le module (955) de sélection de service déconnecte le service de l'écran en réponse à une demande d'un utilisateur ou d'une application.

8. Appareil (900) selon la revendication 1, comprenant en outre :
un module d'interface (965) qui reçoit une demande de connexion entre le service et l'écran d'un utilisateur ou d'une application.

9. Appareil (900) selon la revendication 1, dans lequel le service comprend des informations vidéo, des informations audio et des informations de données.

10. Appareil (900) selon la revendication 9, dans lequel les informations vidéo, les informations audio ou les informations de données sont fournies par un signal de diffusion, un support de stockage ou un réseau.

11. Appareil (900) selon l'une quelconque des revendications précédentes, dans lequel le module (950) générateur d'écrans génère une pluralité d'écrans pour afficher une pluralité de services ; et
le module (955) de sélection de services connecte la pluralité de services à la pluralité d'écrans générés par le module (950) générateur d'écrans.

12. Procédé de configuration dynamique d'écrans multiples, le procédé consistant à :
générer les écrans multiples, y compris un écran logique et un écran d'affichage pour l'affichage d'un service prédéterminé ;
connecter le service à l'écran logique ;
projeter l'écran logique vers un emplacement quelconque de l'écran d'affichage ; et
fournir l'écran d'affichage par l'intermédiaire d'une pluralité de ports de sortie à un écran d'affichage physique ; **caractérisé en ce que :**
le service comprend des informations de données, les informations de données comprennent des informations d'applications concernant un programme d'application destiné au service, les informations d'applications comprennent des informations indiquant si le programme d'application peut être exécuté sur un écran d'incrustation d'image, et la connexion détermine en outre à partir des informations d'applications si le service peut être affiché sur l'écran physique.

13. Procédé selon la revendication 12, dans lequel la connexion du service à l'écran consiste à associer à l'écran un contexte de service qui indique des informations du service.

14. Procédé selon la revendication 12, dans lequel la connexion du service à l'écran consiste à :
déterminer si le service peut être affiché sur l'écran ; et
connecter le service à l'écran sur la base d'un résultat de détermination.

15. Procédé selon la revendication 14, dans lequel la détermination consiste à déterminer si le service peut être affiché sur l'écran si le service est un service non abstrait.

16. Procédé selon la revendication 14, dans lequel la détermination consiste à bloquer la sélection entre l'écran et le service si un premier composant de service, qui est un élément d'un service, et si un second composant de service, qui est préalablement associé à l'écran, sont du même type.

17. Procédé selon la revendication 12, consistant en outre à délivrer l'écran d'affichage à au moins l'un d'un dispositif physique, d'un support de stockage, et d'un module de sortie externe.

18. Procédé selon la revendication 12, consistant en outre à déconnecter le service de l'écran en réponse à une demande d'un utilisateur ou d'une application.

19. Procédé selon la revendication 12, dans lequel le service comprend des informations vidéo, des informations audio, et les informations de données fournies par un signal de diffusion, un support de stockage ou un réseau.

20. Procédé selon l'une quelconque des revendications 12 à 19, dans lequel le procédé consiste à :
générer une pluralité d'écrans pour l'affichage d'une pluralité de services ; et connecter la pluralité de services à la pluralité d'écrans générés.
